# EUROPÄISCHE PATENTSCHRIFT

(11) **EP 2 108 553 B1**
(45) Veröffentlichungstag und Bekanntmachung des Hinweises auf die Patenterteilung: **12.07.2017**
(21) Anmeldenummer: 09005152.5
(22) Anmeldetag: 08.04.2009
(51) Int. Cl.: B60T 7/12, B60T 17/22, B60T 7/20, B60T 13/66, B60T 7/10

(54) **Feststellbremse mit Testfunktion und Verfahren zum Ausführen einer Testfunktion**
Immobilising brake with test capabilities and method for executing a test function
Frein de stationnement doté d'une fonction test et procédé d'exécution d'une fonction test

(30) Priorität: 11.04.2008 DE 102008018470
(43) Veröffentlichungstag der Anmeldung: 14.10.2009
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- WO-A1-02/46016
- WO-A1-2007/028579
- DE-A1-102005 043 607

## Beschreibung

Die Erfindung betrifft eine elektrische Feststellbremse, für ein Nutzfahrzeug, mit einer Handsteuereinheit, einem elektrischen Steuergerät, einer eine Feststellbremsfunktion bereitstellenden ersten Ventileinrichtung und einer eine Testfunktion bereitstellenden zweiten Ventileinrichtung.

Die Erfindung betrifft weiterhin ein Verfahren zum Ausführen einer Testfunktion für eine elektrische Feststellbremse eines ein Zugfahrzeug und einen Anhänger aufweisenden Nutzfahrzeugs, wobei die elektrische Feststellbremse eine Handsteuereinheit, ein elektrisches Steuergerät, eine eine Feststellbremsfunktion bereitstellende erste Ventileinrichtung und eine eine Testfunktion bereitstellende zweite Ventileinrichtung aufweist.

Derartige Vorrichtungen und Verfahren gewinnen im Zusammenhang mit dem Betrieb von Nutzfahrzeugen zunehmend an Bedeutung. Bezüglich der Weiterentwicklung der Systeme stehen insbesondere der Bedienkomfort und die Sicherheit im Vordergrund.

DE 10 2005 043607 A1 offenbart ein Verfahren zum Steuern einer elektrischen Feststellbremse eines Nutzfahrzeugs mit einer elektronischen Steuereinheit und einer mit der elektronischen Steuereinheit kommunizierenden Handsteuereinheit, über die von der Betätigungsart der Handsteuereinheit abhängige Fahrerwünsche an die elektronische Steuereinheit übermittelt werden.

Wird ein aus einem Zugfahrzeug und einem Anhänger bestehendes Nutzfahrzeug unter Verwendung einer Feststellbremse abgestellt, so ist zu beachten, dass üblicherweise nur das Zugfahrzeug über eine druckluftunabhängige Feststellbremseinrichtung in Form von Federspeicherzylindern verfügt, während der Anhänger in einem drucklosen Zustand nicht durch die Feststellbremseinrichtung gesichert werden kann. Um dennoch ein dauerhaft sicheres Abstellen des Nutzfahrzeugs zu ermöglichen, ist es sinnvoll einen Test durchzuführen, bei dem überprüft wird, ob die Feststellbremseinrichtung des Zugfahrzeugs das gesamte Nutzfahrzeug halten kann. Ausgelöst wird die Testfunktion üblicherweise durch einen Taster oder eine separat vorzusehende Schaltposition als Zusatzfunktion einer Handsteuereinheit, die in erster Linie das Öffnen und Schließen der Feststellbremsanlage des Nutzfahrzeugs steuert.

Die Testfunktion wird durch das Betätigen des entsprechenden Tasters beziehungsweise entsprechendes Schalten der Handsteuereinheit gestartet, wobei immer die Gefahr besteht, dass der Fahrer des Nutzfahrzeugs die Testfunktion nicht oder nur unzureichend, das heißt zu kurz, durchführt.

Der Erfindung liegt die Aufgabe zugrunde, sicher zu stellen, dass die Testfunktion regelmäßig in korrekter Art und Weise ausgeführt wird, und gleichzeitig den Bedienkomfort für den Fahrer zu erhöhen.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf der gattungsgemäßen elektrischen Feststellbremse dadurch auf, dass die elektrische Feststellbremse weiterhin ein Zeitschaltglied umfasst. Ein derartiges Zeitschaltglied kann nach dem insbesondere automatischen Starten der Testfunktion den Testzyklus selbständig nach Ablauf eines Zeitintervalls beenden. Die Länge des Zeitintervalls kann dabei voreingestellt oder in Abhängigkeit von einem beispielsweise über Giersensoren gemessenen Neigungswinkel des Nutzfahrzeugs bestimmbar sein. Der Testzyklus kann dabei umso kürzer gehalten werden, je größer der gemessene Neigungswinkel des Nutzfahrzeugs ist. Der Fahrer des Nutzfahrzeugs muss nicht mehr entscheiden, ob ein von ihm manuell eingeleiteter und beendeter Testzyklus eine zeitlich ausreichende Länge aufweist.

Dies bringt einen Sicherheitsgewinn, da der Testzyklus durch das Zeitschaltglied immer ausreichend lange durchgeführt wird. Die Aktivierung des Testzyklus erfolgt weiterhin manuell durch den Fahrer und kann zur Komfortverbesserung insbesondere an das Schließen der Feststellbremse gekoppelt werden, um bei dem Einlegen der Feststellbremse automatisch einen Testzyklus zu starten.

Nützlicherweise kann vorgesehen sein, dass das Zeitschaltglied in dem Steuergerät angeordnet ist. Das Steuergerät der elektrischen Feststellbremse ist für die Ansteuerung der verschiedenen Ventileinrichtungen zuständig, die auch während des Testzyklus geschaltet werden müssen. Daher ist die Anordnung des Zeitschaltgliedes in dem Steuergerät vorteilhaft.

Alternativ kann vorgesehen sein, dass das Zeitschaltglied in der Handsteuereinheit angeordnet ist. Die Verwendung einer mit einem Zeitschaltglied ausgerüsteten Handsteuereinheit ermöglicht beispielsweise die einfache Nachrüstung von Nutzfahrzeugen, die eine manuelle Testfunktion der elektrischen Feststellbremse über die Handsteuereinheit ermöglichen. Weiterhin kann ohne große bauliche Veränderung ein Neufahrzeug, welches bisher nur über eine manuelle Testfunktion verfügte, mit einer automatisierten Testfunktion ausgestattet werden.

Nützlicherweise kann vorgesehen sein, dass das Steuergerät weiterhin eine Druckluftaufbereitungsanlage steuert. Die Verwendung des Steuergerätes der elektrischen Feststellbremse zur Steuerung der Druckluftaufbereitungsanlage ermöglicht die Einsparung elektronischer Bauelemente. Weiterhin ist festzustellen, dass auf diese Weise auch Bauvolumen eingespart wird und die Verkabelung erleichtert werden kann, da die anzusteuernden Ventileinrichtungen der elektrischen Feststellbremse und der Druckluftaufbereitungsanlage üblicherweise räumlich nah beieinander angeordnet sind und kein zusätzliches Steuergerät verbaut werden muss.

Es kann auch vorgesehen sein, dass das Steuergerät weiterhin eine Funktion einer Betriebsbremse steuert. Durch die Übernahme weiterer die Betriebsbremse des Zugfahrzeugs betreffenden Funktionen durch das Steuergerät können elektronische Bauteile beziehungsweise ganze Steuergeräte eingespart werden, die diese Funktionen bisher realisierten. Ein Beispiel hierfür könnte ein ABS-Steuergerät sein.

Weiterhin kann vorgesehen sein, dass das Steuergerät geeignet ist, ein Signal zur Durchführung der Testfunktion einem Anhängerbremssteuermodul mitzuteilen. Durch die Übermittlung des Signals zur Durchführung der Testfunktion an das Anhängerbremssteuermodul kann der Aufbau der elektrischen Feststellbremse vereinfacht werden, da nicht alle Funktionen innerhalb der elektrischen Feststellbremse selbst realisiert werden müssen.

Insbesondere kann vorgesehen sein, dass das Anhängerbremssteuermodul am Zugfahrzeug angeordnet ist. Durch die Anordnung der Anhängerbremssteuermodul am Zugfahrzeug können auch ältere Anhänger, die noch nicht über ein geeignetes Anhängerbremssteuermodul verfügen, mit der Testfunktion betrieben werden.

Dabei kann vorgesehen sein, dass das Anhängerbremssteuermodul geeignet ist, das Signal in ein pneumatisches Signal umzusetzen. Auf diese Weise kann die Länge der pneumatischen Druckleitung, über die die Feststellbremse des Anhängers zur Durchführung der Testfunktion geöffnet wird, beschränkt werden. Dies ermöglicht insbesondere bei einem elektrischen Signal, das an das Anhängerbremssteuermodul übertragen wird, eine vereinfachte Ausführung.

Vorteilhafterweise kann vorgesehen sein, dass das Steuergerät den in einem Betriebsbremskreis herrschenden Druck überwacht und ein Öffnen der elektrischen Feststellbremse nur oberhalb eines Mindestdrucks erlaubt. Diese Sicherheitsfunktion wird auch "Northtand Park Brake Function" genannt und ist in einigen nordeuropäischen Ländern vorgeschrieben. Mit ihr kann beispielsweise verhindert werden, dass die Feststellbremse gelöst wird, bevor ein ausreichender Druck für eine Hilfsbremswirkung der Betriebsbremse zur Verfügung steht.

Nützlicherweise kann vorgesehen sein, dass die erste Ventileinrichtung ein bistabiles 3/2-Wegeventil ist.

Weiterhin kann vorgesehen sein, dass die zweite Ventileinrichtung in einem Anhängersteuermodul angeordnet ist. Die Anordnung der zweiten Ventileinrichtung in einem Anhängersteuermodul ist Bestandteil eines modularen Aufbaukonzepts, bei dem die einzelnen Module nur im Bedarfsfall in dem Nutzfahrzeug verbaut werden und die verbauten Module nur notwendige Ventileinrichtungen umfassen. In diesem Fall heißt das, dass ein elektrisches Feststellbremsmodul für ein Zugfahrzeug funktionsfähig ohne die zweite Ventileinrichtung verbaut werden kann. Die zweite Ventileinrichtung wird lediglich benötigt, falls ein Anhänger ankoppelbar sein soll.

Weiterhin kann die Handsteuereinheit dadurch weitergebildet werden, dass sie keine separate Schaltposition zum Ausführen einer Testfunktion aufweist. Gewöhnliche Handsteuereinheiten, über die gleichzeitig eine Testfunktion schaltbar sein soll, weisen normalerweise mindestens drei unterschiedliche Schaltpositionen auf. In einer Schaltposition ist die Feststellbremse geöffnet, in einer zweiten Schaltposition ist die Feststellbremse geschlossen und in einer dritten Schaltposition wird die Testfunktion für die Feststellbremse durchgeführt. Die Entbehrlichkeit der dritten Schaltposition ermöglicht eine mechanisch einfachere Ausführung der Handsteuereinheit.

Nützlicherweise kann vorgesehen sein, dass das Steuergerät in einer Weise ausgebildet ist, dass der Vorratsdruck der Betriebsbremse überwacht wird und der gemessene Wert an ein elektronisches Bremssystem und/oder ein Fahrerdisplay übermittelt wird. Die Überwachung des Vorratsdrucks der Betriebsbremse ermöglicht neben der Realisierung der "Northtand Park Brake Function" auch eine Funktionalitätseinsparung für ein eventuell vorhandenes elektronisches Bremssystem, welches den Vorratsdruck der Betriebsbremse dann nicht selbständig überwachen muss.

Die Erfindung baut auf dem gattungsgemäßen Verfahren zum Ausführen einer Testfunktion für eine elektrische Feststellbremse eines ein Zugfahrzeug und einen Anhänger aufweisenden Nutzfahrzeugs dadurch auf, dass es die folgenden Schritte umfasst:
- Empfangen eines von der Handsteuereinheit ausgegebenen Signals zu einem Zeitpunkt t₀ zum Schließen der elektrischen Feststellbremse,
- Schließen der Feststellbremse an dem Zugfahrzeug und dem zugehörigen Anhänger nach dem Zeitpunkt t₀,
- automatisches Öffnen der Feststellbremse an dem Anhänger nach einem Zeitintervall Δt₁ zu einem Zeitpunkt t₁ und
- Überwachen der Fahrzeuggeschwindigkeit während eines Zeitintervalls Δt₂ nach dem Zeitpunkt t₁.

Auf dieser Grundlage werden die Vorteile und Besonderheiten des erfindungsgemäßen Systems im Rahmen eines Verfahrens umgesetzt.

Vorzugsweise ist dabei vorgesehen, dass der Zeitpunkt t₁, zu dem die Feststellbremse des Anhängers geöffnet wird, von dem Erreichen einer Mindestfeststellbremswirkung abhängt. Das das Zeitintervall Δt₁ überwachende Zeitschaltglied wird also erst gestartet, nachdem die Feststellbremse eine ausreichende Bremswirkung beziehungsweise Bremskraft nach dem Betätigen der Feststellbremse erreicht hat. Die Bremswirkung beziehungsweise Bremskraft der Feststellbremse ist über einen Sensor direkt oder indirekt über einen eine zur Bremskraft proportionale Größe messenden Sensor detektierbar. Ein Sensor zur Detektion einer zur Bremskraft proportionalen Größe kann beispielsweise den Betätigungsweg des Aktuators der Feststellbremse messen. Die Kopplung des Zeitpunkts t₁ an eine Mindestfeststellbremswirkung erhöht die Zuverlässigkeit der Testfunktion Insbesondere kann vorgesehen sein, dass das Steuergerät zu einem Zeitpunkt t₂ nach dem Zeitintervall Δt₂ die Feststellbremse des Anhängers automatisch schließt. Dieser Verfahrensschritt entlastet die Feststellbremse des Zugfahrzeugs, auch wenn während des Testzyklus festgestellt wurde, dass die Feststellbremse des Zugfahrzeugs das gesamte Nutzfahrzeug halten kann.

Weiterhin kann vorgesehen sein, dass das Zeitintervall Δt₂ einstellbar ist und in einem Schreib-Lesespeicher gespeichert wird. Die Einstellbarkeit des Zeitintervalls Δt₂ erlaubt die eine fahrzeugspezifische Anpassung der Testfunktion, wobei beispielsweise der Ladezustand des Fahrzeugs bei jeder Durchführung oder die Dimensionierung der Bremsanlage ab Werk berücksichtigt werden können. Die Dauer des Zeitintervalls Δt₂ kann in einem Schreib-Lesespeicher gespeichert werden.

Nützlicherweise kann vorgesehen sein, dass das Steuergerät die Fahrzeuggeschwindigkeit mittels Raddrehzahlsensoren misst. Die Detektion der Fahrzeuggeschwindigkeit mittels Raddrehzahlsensoren ist eine einfache Möglichkeit, auch eine nur geringe Geschwindigkeit des eventuell während des Testzyklus wegrollenden Nutzfahrzeugs zu detektieren.

Nützlicherweise kann vorgesehen sein, dass das Steuergerät ein Fehlersignal für den Fahrer ausgibt, wenn das Nutzfahrzeug bei der Ausführung der Testfunktion nicht stehen bleibt und anrollt. Die Ausgabe eines Fehlersignals für den Fahrer, beispielsweise in optischer oder akustischer Form, schafft zusätzliche Sicherheit, da der Fahrer aktiv auf die unzureichende Bremswirkung der Feststellbremse des Nutzfahrzeugs hingewiesen wird.

Darüber hinaus kann vorgesehen sein, dass das Steuergerät ein Fehlersignal an wenigstens ein weiteres Steuergerät übermittelt, wenn das Nutzfahrzeug bei der Ausführung der Testfunktion nicht stehen bleibt und anrollt und dass das wenigstens eine weitere Steuergerät aufgrund des Fehlersignals eine Betriebsbremse des Nutzfahrzeugs schließt, um ein ungewolltes Rollen des Nutzfahrzeugs zu verhindern. Auf diese Weise kann ein übermäßiges Wegrollen des Nutzfahrzeugs während der Ausführung der Testfunktion unterbunden werden.

Zusätzlich ist von Vorteil, dass nach einer erfolgreichen Durchführung der Testfunktion automatisch eine weitere Funktion durchgeführt beziehungsweise gestartet wird. Eine weitere Funktion kann beispielsweise das Betätigen einer Signalanzeige, zum Beispiel einer Glühlampe, oder die Dokumentation über die Durchführung der Testfunktion durch ein anderes Fahrzeugsystem, zum Beispiel einem digitalen Fahrtenschreiber beziehungsweise einem Unfallschreibergerät. Die Deaktivierung eines Fahrzeugsystems ist ebenfalls unter dem Durchführen einer Funktion zu verstehen. So kann zum Beispiel der Park- beziehungsweise Abstellvorgang automatisiert werden, indem nach erfolgreich durchgeführter Testfunktion ein Gang des Getriebes automatisch eingelegt und der Motor abgeschaltet wird.

Die Erfindung wird nun mit Bezug auf die begleitenden Zeichnungen anhand bevorzugter Ausführungsformen beispielhaft erläutert.

Es zeigen:
- Figur 1: ein vereinfachtes Schaltungsdiagramm einer erfindungsgemäßen elektrischen Feststellbremse;
- Figur 2: ein Schaltungsdiagramm einer stufbaren elektrischen Feststellbremse;
- Figur 3: ein vereinfachtes Schaltungsdiagramm einer weiteren erfindungsgemäßen elektrischen Feststellbremse;
- Figur 4: ein Schaltungsdiagramm einer weiteren stufbaren elektrischen Feststellbremse;
- Figur 5: eine schematische Darstellung eines ein Zugfahrzeug und einen Anhänger aufweisenden Nutzfahrzeugs und
- Figur 6: ein zeitliches Verlaufsdiagramm.

In unterschiedlichen Zeichnungen verwendete gleiche Bezugszeichen bezeichnen gleiche oder gleichartige Bestandteile.

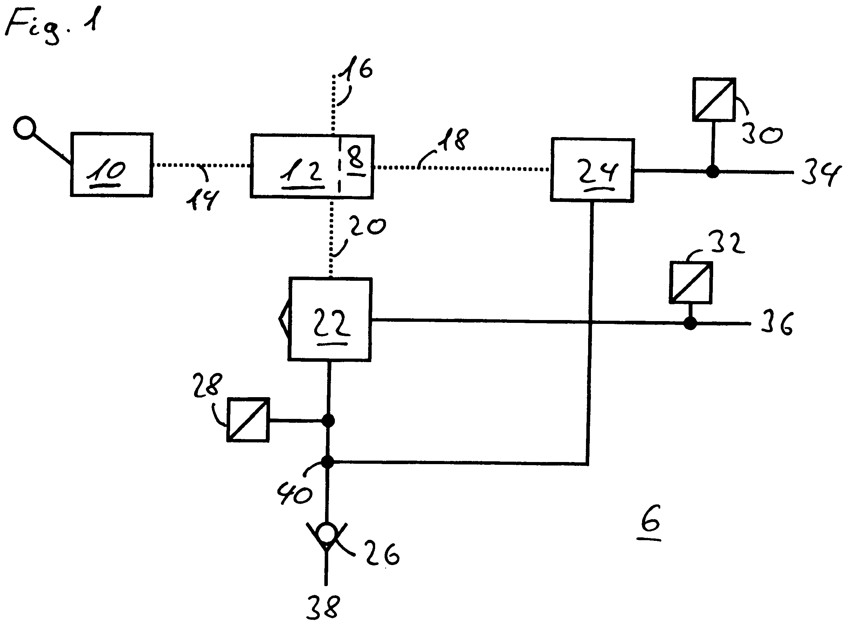

Figur 1 zeigt ein vereinfachtes Schaltungsdiagramm einer erfindungsgemäßen elektrischen Feststellbremse 6. Die elektrische Feststellbremse 6 umfasst im Wesentlichen eine Handsteuereinheit 10, ein ein Zeitschaltglied 8 aufweisendes Steuergerät 12, eine erste Ventileinrichtung 22, eine zweite Ventileinrichtung 24 und mehrere Drucksensoren 28, 30, 32. Das Steuergerät 12 ist über elektrische Leitungen 18, 20 mit der ersten Ventileinrichtung 22 und der zweiten Ventileinrichtung 24 gekoppelt. Weiterhin kann das Steuergerät 12 über eine elektrische Leitung 14 Signale von der Handsteuereinheit 10 empfangen. Über eine weitere elektrische Leitung 16, die beispielsweise einen Anschluss an einen seriellen Bus eines Nutzfahrzeugs 2 darstellen kann, kann das Steuergerät 12 ein Fehlersignal an nicht dargestellte weitere Steuergeräte und/oder ein Fahrerdisplay übermitteln. Über die elektrische Leitung 16 ist weiterhin auch die Ausgabe eines akustischen oder optischen Warnsignals für den Fahrer möglich, falls ein Testzyklus eine unzureichende Bremswirkung der Feststellbremse des Zugfahrzeugs ergibt. Es ist auch denkbar, dass das Zeitschaltglied 8 in der Handsteuereinheit 10 angeordnet ist.

Die erste Ventileinrichtung 22 weist neben einem durch ein Rückschlagventil 26 gesicherten Anschluss 38 an eine Druckversorgung, die beispielsweise aus dem Betriebsbremskreis des Nutzfahrzeugs erfolgen kann, einen Entlüftungsanschluss und einen Anschluss an die Federspeicherzylinder 36 des Zugfahrzeugs 4 auf. Der Druckversorgungsanschluss 38 wird durch einen Drucksensor 28 überwacht, und der Anschluss der Federspeicherzylinder 36 wird von einem Drucksensor 32 überwacht. Die zweite Ventileinrichtung 24 ist über einen Schaltungsknoten 40 an den Druckversorgungsanschluss 38 gekoppelt und weist einen weiteren Anschluss 34 für einen Anhänger 56 auf, der von einem Drucksensor 30 überwacht wird. Wenn die zweite Ventileinrichtung 24 als einfaches 2/2-Wegeventil ausgebildet ist, wie dargestellt, ist im Bereich des Anschlusses 34 des Anhängers 56 eine Entlüftungseinrichtung vorzusehen, die von dem Steuergerät 12 ansteuerbar ist. Eine solche Entlüftungseinrichtung kann auch in die zweite Ventileinrichtung 24 integriert werden, die dann als 3/2-Wegeventil ausgebildet ist. Die von den Drucksensoren 28, 30,32 gemessenen Druckwerte können an das Steuergerät 12 übermittelt werden.

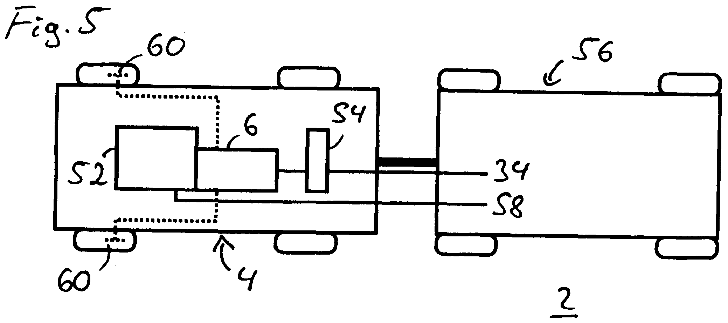

Betätigt der Fahrer die Handsteuereinheit 10, um die Feststellbremse zu schließen, wird ein Signal an das Steuergerät 12 übermittelt. Durch dieses Signal wird das Steuergerät 12 veranlasst, die erste Ventileinrichtung 22 und die zweite Ventileinrichtung 24 so zu schalten, dass die Feststellbremse eines Zugfahrzeugs 4 (siehe Figur 5) und die Feststellbremse des Anhängers 56 (siehe Figur 5) geschlossen werden. Danach wird die zweite Ventileinrichtung 24 beziehungsweise eine der zweiten Ventileinrichtung 24 nachgeordnete Entlüftungseinrichtung, die nicht dargestellt ist, so geschaltet, dass die Feststellbremse des Anhängers 56 entlüftet wird. In diesem Zustand muss das gesamte Nutzfahrzeug 2 (siehe Figur 5) von der Feststellbremse des Zugfahrzeugs 4 gehalten werden. Das Entlüften der Feststellbremse des Anhängers 56 wird dabei von dem Zeitschaltglied 8 initiiert, das beispielsweise auf Basis eines elektrischen Resonators oder eines Schwingquarzes basierend aufgebaut sein kann. Nach Ablauf eines vorgegebenen oder bestimmbaren Zeitintervalls schließt das Steuergerät 12 auf Veranlassung des Zeitschaltgliedes 8 die Feststellbremse des Anhängers 56 wieder mittels der zweiten Ventileinrichtung 24, wobei die Dauer dieses Zeitintervalls beispielsweise in einem nicht dargestellten Schreib-Lesespeicher gespeichert sein kann.

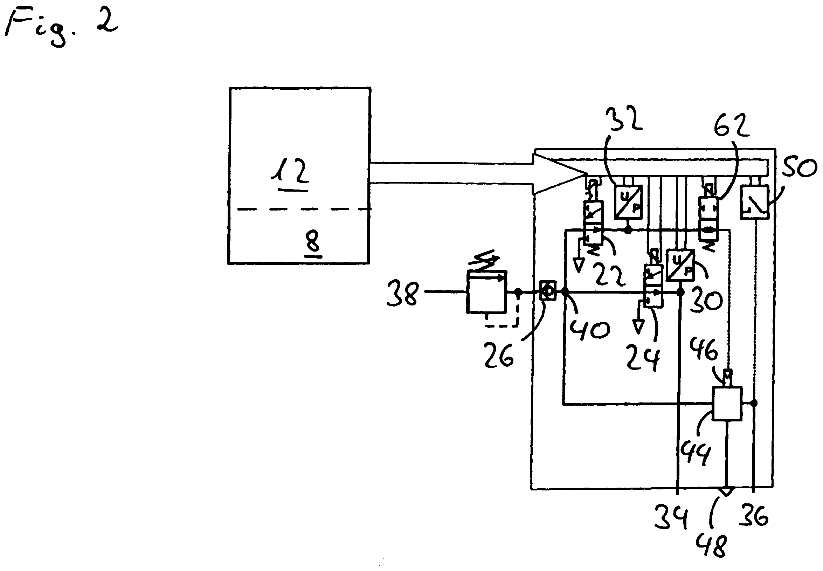

Figur 2 zeigt ein Schaltungsdiagramm einer stufbaren elektrischen Feststellbremse. Neben den in Figur 1 dargestellten Komponenten sind in dem Schaltungsdiagramm ein Relaisventil 44 mit einem Steuereingang 46 und ein Druckschalter 50 gezeigt. Die dargestellte Ausführungsform der Feststellbremse ist gleichzeitig in der Lage, eine Steckbremsfunktion bereitzustellen. In Abhängigkeit der Schaltstellungen der Ventileinrichtungen 22 und 62 wird der Steuereingang 46 eines Relaisventils 44 angesteuert. Das Relaisventil 44 wird mit Druck aus der Versorgungsleitung 38 über einen Schaltungsknoten 40 beaufschlagt, der in Abhängigkeit des am Steuereingang 46 des Relaisventils 44 anstehenden Steuerdrucks an den Federspeicherbremszylinderanschluss 36 des Zugfahrzeugs 4 weitergeleitet wird. Weiterhin ist über den Druckschalter 50 erfassbar, ob der Federspeicherbremszylinderanschluss 36 des Zugfahrzeugs 4 belüftet oder entlüftet ist, also ob die Feststellbremse eingelegt oder gelöst ist. In der dargestellten Stellung des 2/2-Wegevetils 62 kann der Federspeicherbremszylinderanschluss 36 in Abhängigkeit der Stellung des 3/2-Wegeventils 22 belüftet oder entlüftet werden. Wird das 2/2-Wegeventil 62 umgeschaltet, so wird der Druck am Federspeicherbremszylinderanschluss 36 gehalten.

Die Testfunktion der elektrischen Feststellbremse kann bei dieser Ausführungsform in analoger Weise zu Figur 1 realisiert werden. Anzumerken ist lediglich, dass der Druck des Federspeicherzylinderanschlusses 36 durch Umschalten des 2/2-Wegeventils 62 in seiner Druckhaltestellung aufrechterhalten werden kann.

Die zweite Ventileinrichtung 24 die hier als 3/2-Wegeventil ausgebildet ist, kann pulsweitenmoduliert angesteuert werden und so einen gezielten Druck für den Anhänger 56 zur Verfügung stellen. Insbesondere kann eine Bremsung des Anhängers 56 unabhängig von der Bremsung des Zugfahrzeugs 4 erfolgen, so dass ein Auflaufen des Anhängers 56 auf das Zugfahrzeug 4 im Rahmen einer sogenannten Streckbremsung vermieden werden kann.

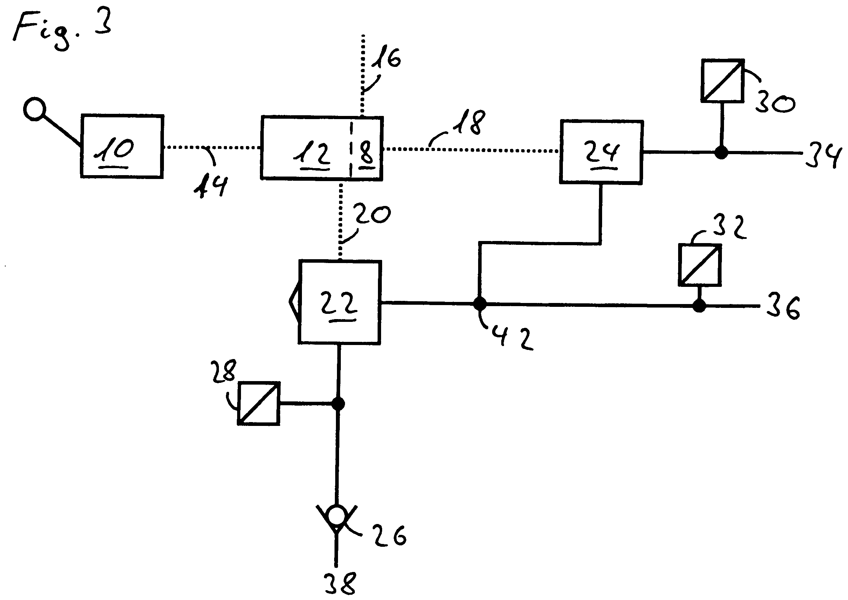

Figur 3 zeigt ein vereinfachtes Schaltungsdiagramm einer weiteren erfindungsgemäßen elektrischen Feststellbremse 6. Die in Figur 3 dargestellte Ausführungsform der elektrischen Feststellbremse ist im Wesentlich identisch zu der in Figur 1 dargestellten Form. Der Versorgungsdruck der zweiten Ventileinrichtung 24 wird jedoch einem Schaltungsknoten 42 entnommen, der stromabwärts der ersten Ventileinrichtung 22 angeordnet ist. Dies macht dann nicht dargestellte Ventileinrichtungen im Bereich der Anschlüsse 34 und 36 notwendig, um die verschiedenen für die Testfunktion notwendigen Druckzustände realisieren zu können.

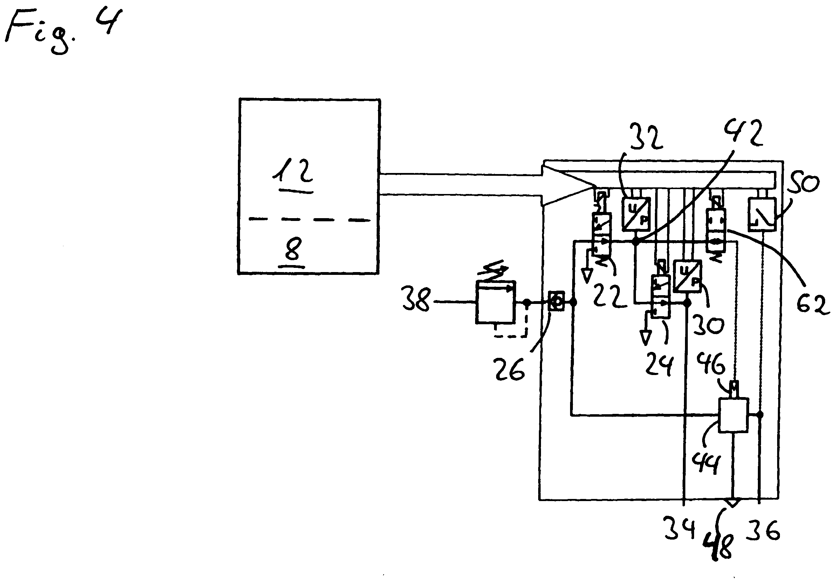

Figur 4 zeigt ein Schaltungsdiagramm einer weiteren stufbaren elektrischen Feststellbremse. Figur 4 ist weitgehend mit Figur 2 identisch, die Druckversorgung der zweiten Ventileinrichtung 24 wird jedoch über einen Schaltungsknoten 42 realisiert, der stromabwärts der ersten Ventileinrichtung 22 angeordnet ist. Dies macht im Bereich des Anschluss 34 eine weitere nicht dargestellte Ventileinrichtung zum Druckhalten notwendig.

Figur 5 zeigt eine schematische Darstellung eines ein Zugfahrzeug 4 und einen Anhänger 56 aufweisenden Nutzfahrzeugs 2. Dargestellt sind weiterhin Raddrehzahlsensoren 60, ein Anhängersteuermodul 54 und eine Druckluftaufbereitungsanlage 52, die über einen entsprechenden Anschluss 58 auch die Druckversorgung des Anhängers 56 sicherstellt.

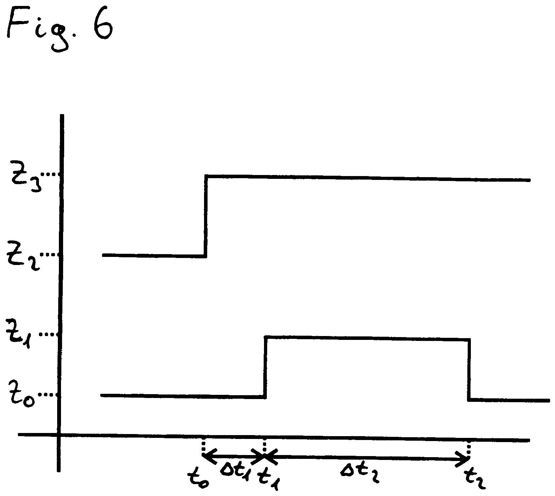

Figur 6 zeigt ein zeitliches Verlaufsdiagramm verschiedener während der Testfunktion auftretenden Zustände:
- Z₀:: zweite Ventileinrichtung unbestromt
- Z₁:: zweite Ventileinrichtung bestromt
- Z₂:: Federspeicherzylinder belüftet
- Z₃:: Federspeicherzylinder entlüftet

Ausgehend von dem Zustandspaar (Z₀, Z₂) wird zu einem Zeitpunkt t₀ die Handsteuereinheit 10 betätigt und in Folge dessen die Feststellbremse geschlossen. Dabei werden zunächst sowohl die Feststellbremse des Zugfahrzeugs 4 als auch die Feststellbremse des Anhängers 56 geschlossen. Das Betätigen der Handsteuereinheit 10 ist dabei gleichzeitig ein Signal für das Zeitschaltglied 8, entsprechende Taktsignale für den anschließenden Testzyklus an das Steuergerät 12 zu übermitteln. Nach Verstreichen eines ersten Zeitintervalls Δt₁ = t₁ - t₀ wird die zweite Ventileinrichtung 24 vom Zustand Z₀ in den Zustand Z₁ durch Bestromen überführt. Dadurch wird die Feststellbremse des Anhängers 56 entlüftet, das heißt geöffnet. Die Größe des Zeitintervalls Δt₁ kann variabel voreingestellt werden und insbesondere auch 0 sein. Nach Verstreichen eines weiteren Zeitintervalls Δt₂ = t₂ - t₁ wird ein weiteres Taktsignal von dem Zeitschaltglied 8 ausgesandt, welches das Steuergerät 12 veranlasst die zweite Ventileinrichtung 24 wieder in den unbestromten Zustand Z₀ zu versetzen. Idealerweise wird gleichzeitig auch die Feststellbremse des Anhängers 56 wieder belüftet, um die Federspeicherzylinder des Zugfahrzeugs 4 zu entlasten. Das Zeitintervall Δt₂ kann werkseitig oder variabel voreingestellt sein oder anhand von den Neigungswinkel des Nutzfahrzeugs 2 bestimmenden Giersensoren bestimmt werden. Da die Trägheit des Nutzfahrzeugs 2 während der Dauer des Testzyklus überwindbar sein soll, liegt die Gesamtdauer des Testzyklus im Bereich einiger Sekunden. Auch die fehlerfreie Durchführung des Testzyklus kann dem Fahrer optisch oder akustisch signalisiert werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 2: Nutzfahrzeug
- 4: Zugfahrzeug
- 6: elektrische Feststellbremse
- 8: Zeitschaltglied
- 10: Handsteuereinheit
- 12: Steuergerät
- 14: elektrische Leitung
- 16: elektrische Leitung
- 18: elektrische Leitung
- 20: elektrische Leitung
- 22: Ventileinrichtung
- 24: Ventileinrichtung
- 26: Rückschlagventil
- 28: Drucksensor
- 30: Drucksensor
- 32: Drucksensor
- 34: Anschluss Anhänger
- 36: Anschluss Federspeicherzylinder
- 38: Anschluss Druckversorgung
- 40: Schaltungsknoten
- 42: Schaltungsknoten
- 44: Relaisventil
- 46: Steuereingang
- 48: Entlüftung
- 50: Druckschalter
- 52: Druckluftaufbereitungsanlage
- 54: Anhängersteuermodul
- 56: Anhänger
- 58: Druckversorgung
- 60: Raddrehzahlsensor
- 62: Ventileinrichtung
- Z₀: zweite Ventileinrichtung unbestromt
- Z₁: zweite Ventileinrichtung bestromt
- Z₂: Federspeicherzylinder belüftet
- Z₃: Federspeicherzylinder entlüftet

## Patentansprüche

1. Elektrische Feststellbremse (6), für ein Nutzfahrzeug (2), mit
- einer Handsteuereinheit (10),
- einem elektrischen Steuergerät (12),
- einer eine Feststellbremsfunktion bereitstellenden ersten Ventileinrichtung (22) und
- einer eine Testfunktion bereitstellenden zweiten Ventileinrichtung (24),
- wobei die elektrische Feststellbremse (6) weiterhin ein Zeitschaltglied (8) umfasst, welches die Testfunktion nach Ablauf eines Zeitintervalls beendet,
**dadurch gekennzeichnet, dass** die Länge des Zeitintervalls in Abhängigkeit von einem gemessenen Neigungswinkel des Nutzfahrzeugs (2) bestimmbar ist, wobei die Länge des Zeitintervalls umso kürzer ist, je größer der gemessene Neigungswinkel des Nutzfahrzeugs (2) ist.

2. Elektrische Feststellbremse (6) nach Anspruch 1, **dadurch gekennzeichnet, dass** das Zeitschaltglied (8) in dem Steuergerät (12) angeordnet ist.

3. Elektrische Feststellbremse (6) nach Anspruch 1, **dadurch gekennzeichnet, dass** das Zeitschaltglied (8) in der Handsteuereinheit (10) angeordnet ist.

4. Elektrische Feststellbremse (6) nach einem der vorhergehenden Ansprüche, **dadurch gekennzeichnet, dass** das Steuergerät (12) weiterhin eine Druckluftaufbereitungsanlage (52) steuert.

5. Elektrische Feststellbremse (6) nach einem der vorhergehenden Ansprüche, **dadurch gekennzeichnet, dass** das Steuergerät (12) weiterhin eine Funktion einer Betriebsbremse steuert.

6. Elektrische Feststellbremse (6) nach einem der vorgehenden Ansprüche, **dadurch gekennzeichnet, dass** das Steuergerät (12) geeignet ist, ein Signal zur Durchführung der Testfunktion einem Anhängerbremssteuermodul (54) mitzuteilen.

7. Elektrische Feststellbremse (6) nach Anspruch 6, **dadurch gekennzeichnet, dass** das Anhängerbremssteuermodul (54) am Zugfahrzeug (4) angeordnet ist.

8. Elektrische Feststellbremse (6) nach Anspruch 6 oder 7, **dadurch gekennzeichnet, dass** das Anhängerbremssteuermodul (54) geeignet ist, das Signal in ein pneumatisches Signal umzusetzen.

9. Elektrische Feststellbremse (6) nach einem der vorhergehenden Ansprüche, **dadurch gekennzeichnet, dass** das Steuergerät (12) den in einem Betriebsbremskreis herrschenden Druck überwacht und ein Öffnen der elektrischen Feststellbremse (6) nur oberhalb eines Mindestdrucks erlaubt.

10. Elektrische Feststellbremse (6) nach einem der vorhergehenden Ansprüche, **dadurch gekennzeichnet, dass** die erste Ventileinrichtung (22) ein bistabiles 3/2-Wegeventil ist.

11. Elektrische Feststellbremse (6) nach einem der vorhergehenden Ansprüche, **dadurch gekennzeichnet, dass** die zweite Ventileinrichtung (24) in einem Anhängersteuermodul (54) angeordnet ist.

12. Elektrische Feststellbremse (6) nach einem der vorhergehenden Ansprüche, **dadurch gekennzeichnet, dass** die Handsteuereinheit (10) keine separate Schaltposition zum Ausführen einer Testfunktion aufweist.

13. Elektrische Feststellbremse (6) nach einem der vorhergehenden Ansprüche, **dadurch gekennzeichnet, dass** das Steuergerät (12) in einer Weise ausgebildet ist, dass der Vorratsdruck der Betriebsbremse überwacht wird und der gemessene Wert an ein elektronisches Bremssystem und/oder ein Fahrerdisplay übermittelt wird.

14. Nutzfahrzeug (2) mit einer elektrischen Feststellbremse (6) nach einem der vorhergehenden Ansprüche.

15. Verfahren zum Ausführen einer Testfunktion für eine elektrische Feststellbremse (6) eines ein Zugfahrzeug (4) und einen Anhänger (56) aufweisenden Nutzfahrzeugs (2), wobei die elektrische Feststellbremse eine Handsteuereinheit (10), ein elektrisches Steuergerät (12), eine eine Feststellbremsfunktion bereitstellende erste Ventileinrichtung (22) und eine eine Testfunktion bereitstellende zweite Ventileinrichtung (24) aufweist, mit den folgenden Schritten:
- Empfangen eines von der Handsteuereinheit (10) ausgegebenen Signals zu einem Zeitpunkt t₀ zum Schließen der elektrischen Feststellbremse (6),
- Schließen der Feststellbremse an dem Zugfahrzeug (4) und dem zugehörigen Anhänger (56) nach dem Zeitpunkt t₀,
- Automatisches öffnen der Feststellbremse an dem Anhänger (56) nach einem Zeitintervall Δt₁ zu einem Zeitpunkt t₁ und
- Überwachen der Fahrzeuggeschwindigkeit während eines Zeitintervalls Δt₂ nach dem Zeitpunkt t₁,
**dadurch gekennzeichnet, dass** die Länge des Zeitintervalls Δt₂ in Abhängigkeit von einem gemessenen Neigungswinkel des Nutzfahrzeugs (2) bestimmt wird, wobei die Länge des Zeitintervalls Δt₂ umso kürzer wird, je größer der gemessene Neigungswinkel des Nutzfahrzeugs (2) ist.

16. Verfahren zum Ausführen einer Testfunktion nach Anspruch 15, **dadurch gekennzeichnet, dass** der Zeitpunkt t₁, zu dem die Feststellbremse des Anhängers (56) geöffnet wird, von dem Erreichen einer Mindestfeststellbremswirkung abhängt.

17. Verfahren zum Ausführen einer Testfunktion nach Anspruch 15 oder 16, **dadurch gekennzeichnet, dass** das Steuergerät (12) zu einem Zeitpunkt t₂ nach dem Zeitintervall Δt₂ die Feststellbremse des Anhängers automatisch schließt.

18. Verfahren zum Ausführen einer Testfunktion nach einem der Ansprüche 15 bis 17, **dadurch gekennzeichnet, dass** das Zeitintervall Δt₂ einstellbar ist und in einem Schreib-Lesespeicher gespeichert wird.

19. Verfahren zum Ausführen einer Testfunktion nach einem der Ansprüche 15 bis 18, **dadurch gekennzeichnet, dass** das Steuergerät (12) die Fahrzeuggeschwindigkeit mittels Raddrehzahlsensoren (60) misst.

20. Verfahren zum Ausführen einer Testfunktion nach einem der Ansprüche 15 bis 19, **dadurch gekennzeichnet, dass** das Steuergerät (12) ein Fehlersignal für den Fahrer ausgibt, wenn das Nutzfahrzeug (2) bei der Ausführung der Testfunktion nicht stehen bleibt und anrollt.

21. Verfahren zum Ausführen einer Testfunktion nach einem der Ansprüche 15 bis 20, **dadurch gekennzeichnet,**
- **dass** das Steuergerät (12) ein Fehlersignal an wenigstens ein weiteres Steuergerät übermittelt, wenn das Nutzfahrzeug (2) bei der Ausführung der Testfunktion nicht stehen bleibt und anrollt und
- **dass** das wenigstens eine weitere Steuergerät aufgrund des Fehlersignals eine Betriebsbremse des Nutzfahrzeugs (2) schließt, um ein ungewolltes Rollen des Nutzfahrzeugs (2) zu verhindern.

22. Verfahren zum Ausführen einer Testfunktion nach einem der Ansprüche 15 bis 20, **dadurch gekennzeichnet, dass** nach einer erfolgreichen Durchführung der Testfunktion automatisch eine weitere Funktion durchgeführt beziehungsweise gestartet wird.

## Claims

1. Electric parking brake (6) for a commercial vehicle (2), having:
- a manual control unit (10)
- an electrical control unit (12),
- a first valve means (22) providing a parking brake function and
- a second valve means (24) providing a test function,
- wherein the electric parking brake (6) further has a timing circuit (8), which ends the test function after a time interval,
**characterised in that** the length of the time interval can be determined as a function of a measured angle of inclination of the commercial vehicle (2), wherein the length of the time interval is shorter, the greater the measured angle of inclination of the commercial vehicle (2).

2. Electric parking brake (6) according to claim 1, **characterised in that** the timing circuit (8) is arranged in the control unit (12).

3. Electric parking brake (6) according to claim 1, **characterised in that** the timing circuit (8) is arranged in the manual control unit (10).

4. Electric parking brake (6) according to one of the preceding claims, **characterised in that** the control unit (12) further controls a compressed air processing system (52).

5. Electric parking brake (6) according to one of the preceding claims, **characterised in that** the control unit (12) further controls a function of a service brake.

6. Electric parking brake (6) according to one of the preceding claims, **characterised in that** the control unit (12) is adapted to communicate a signal to perform the test function to a trailer brake control module (54).

7. Electric parking brake (6) according to claim 6, **characterised in that** the trailer brake control module (54) is arranged on the tractor (4).

8. Electric parking brake (6) according to claim 6 or 7, **characterised in that** the trailer brake control module (54) is adapted to convert the signal into a pneumatic signal.

9. Electric parking brake (6) according to one of the preceding claims, **characterised in that** the control unit (12) monitors the pressure prevailing in a service brake circuit and allows an electric parking brake (6) to open only above a minimum pressure.

10. Electric parking brake (6) according to one of the preceding claims, **characterised in that** the first valve means (22) is a bi-stable 3/2 directional control valve.

11. Electric parking brake (6) according to one of the preceding claims, **characterised in that** the second valve means (24) is arranged in a trailer control module (54).

12. Electric parking brake (6) according to one of the preceding claims, **characterised in that** the manual control unit (10) does not have a separate switch position for performing a test function.

13. Electric parking brake (6) according to one of the preceding claims, **characterised in that** the control unit (12) is designed in such a way that the supply pressure of the service brake is monitored and the measured value is transmitted to an electronic braking system and / or a driver display.

14. Commercial vehicle (2) having an electric parking brake (6) according to one of the preceding claims.

15. Method for performing a test function for an electric parking brake (6) of a commercial vehicle (2) having a tractor (4) and a trailer (56), wherein the electric parking brake has a manual control unit (10), an electrical control unit (12), a first valve means (22) providing a parking brake function, and a second valve means (24) providing a test function, having the following steps:
- receiving a signal output by the manual control unit (10) at a time to to close the electric parking brake (6),
- closing the parking brake on the tractor (4) and the associated trailer (56) after the time t₀,
- automatically opening the parking brake on the trailer (56) after a time interval Δt₁ at a time t₁, and
- monitoring the vehicle speed during a time interval Δt₂ after the time t₁,
**characterised in that** the length of the time interval Δt₂ is determined as a function of a measured angle of inclination of the commercial vehicle (2), wherein the length of the time interval Δt₂ is shorter, the greater the measured angle of inclination of the commercial vehicle (2).

16. Method for performing a test function according to claim 15, **characterised in that** the time t₁, at which the parking brake of the trailer (56) is opened, is dependent on a minimum parking braking action being reached.

17. Method for performing a test function according to claim 15 or 16, **characterised in that** the control unit (12) automatically closes the parking brake of the trailer at a time t₂ after the time interval Δt₂.

18. Method for performing a test function according to one of claims 15 to 17, **characterised in that** the time interval Δt₂ can be adjusted and is stored in a read-write memory.

19. Method for performing a test function according to one of claims 15 to 18, **characterised in that** the control unit (12) measures the vehicle speed by means of wheel speed sensors (60).

20. Method for performing a test function according to one of claims 15 to 19, **characterised in that** the control unit (12) outputs an error signal for the driver if the commercial vehicle (2) does not remain still and rolls while the test function is being performed.

21. Method for performing a test function according to one of claims 15 to 20, **characterised in that**
- the control unit (12) transmits an error signal to at least one further control unit if the commercial vehicle (2) does not remain still and rolls while the test function is being performed,
- the at least one further control unit closes a service brake of the commercial vehicle (2) based on the error signal, in order to prevent undesired rolling of the commercial vehicle (2).

22. Method for performing a test function according to one of claims 15 to 20, **characterised in that** after the test function has been successfully performed, a further function is automatically performed and / or started.

## Revendications

1. Frein (6) de stationnement électrique pour un véhicule (2) utilitaire, comprenant
- une unité (10) de commande à la main,
- un appareil (12) électrique de commande,
- un premier dispositif (22) de soupape mettant à disposition une fonction de frein de stationnement et
- un deuxième dispositif (24) de soupape mettant à disposition une fonction de test,
- dans lequel le frein (6) de stationnement électrique comprend en outre une minuterie (8), qui met fin à la fonction de test, après l'expiration d'un intervalle de temps,
**caractérisé en ce que** la longueur de l'intervalle de temps peut être déterminée en fonction d'un angle d'inclinaison mesuré du véhicule (2) utilitaire, la longueur de l'intervalle de temps étant d'autant plus courte que l'angle d'inclinaison mesuré du véhicule (2) utilitaire est plus grand.

2. Frein (6) de stationnement électrique suivant la revendication 1, **caractérisé en ce que** la minuterie (8) est disposée dans l'appareil (12) de commande.

3. Frein (6) de stationnement électrique suivant la revendication 1, **caractérisé en ce que** la minuterie (8) est disposée dans l'unité (10) de commande à la main.

4. Frein (6) de stationnement électrique suivant l'une des revendications précédentes, **caractérisé en ce que** l'appareil (12) de commande commande en outre un système (52) de conditionnement d'air comprimé.

5. Frein (6) de stationnement électrique suivant l'une des revendications précédentes, **caractérisé en ce que** l'appareil (12) de commande commande en outre une fonction d'un frein de service.

6. Frein (6) de stationnement électrique suivant l'une des revendications précédentes, **caractérisé en ce que** l'appareil (12) de commande est propre à communiquer un signal pour effectuer la fonction de test à un module (54) de commande d'un frein de remorque.

7. Frein (6) de stationnement électrique suivant la revendication 6, **caractérisé en ce que** le module (54) de commande de frein de remorque est disposé sur le véhicule (4) de traction.

8. Frein (6) de stationnement électrique suivant la revendication 6 ou 7, **caractérisé en ce que** le module (54) de commande de frein de remorque est propre à transformer le signal en un signal pneumatique.

9. Frein (6) de stationnement électrique suivant l'une des revendications précédentes, **caractérisé en ce que** l'appareil (12) de commande contrôle la pression régnant dans un circuit de frein de service et ne permet une ouverture du frein (6) de stationnement électrique qu'au dessus d'une pression minimum.

10. Frein (6) de stationnement électrique suivant l'une des revendications précédentes, **caractérisé en ce que** le premier dispositif (22) de soupape est une soupape bistable à 3/2 voies.

11. Frein (6) de stationnement électrique suivant l'une des revendications précédentes, **caractérisé en ce que** le deuxième dispositif (24) de soupape est disposé dans un module (54) de commande de remorque.

12. Frein (6) de stationnement électrique suivant l'une des revendications précédentes, **caractérisé en ce que** l'unité (10) de commande à la main n'a pas de position de manoeuvre distincte pour exécuter une fonction de test.

13. Frein (6) de stationnement électrique suivant l'une des revendications précédentes, **caractérisé en ce que** l'appareil (12) de commande est constitué de façon à contrôler la pression de réserve du frein de service et à transmettre la valeur mesurée à un système électronique de frein et/ou à un affichage pour le conducteur.

14. Véhicule (2) utilitaire ayant un frein (6) de stationnement électrique suivant l'une des revendications précédentes.

15. Procédé de mise en oeuvre d'une fonction de test pour un frein (6) de stationnement électrique d'un véhicule (2) utilitaire ayant un véhicule (4) de traction et une remorque (56), le frein de stationnement électrique ayant une unité (10) de commande à la main, un appareil (12) électrique de commande, un premier dispositif (22) de soupape mettant à disposition une fonction de frein de stationnement et un deuxième dispositif (24) de soupape mettant à disposition une fonction de test comprenant les stades suivants :
- réception d'un signal émis par l'unité (10) de commande à la main à un instant t₀ pour la fermeture du frein (6) de stationnement électrique,
- fermeture du frein de stationnement sur le véhicule (4) de traction et sur la remorque (56) associée, après l'instant t₀,
- ouverture automatique du frein de stationnement sur la remorque (56), après un intervalle Δt₁ de temps par rapport à un instant t₁ et
- contrôle de la vitesse du véhicule pendant un intervalle Δt₂ de temps après l'instant t₁,
**caractérisé en ce que** l'on détermine la longueur de l'intervalle Δt₂ de temps en fonction d'un angle d'inclinaison mesuré du véhicule (2) utilitaire, la longueur de l'intervalle Δt₂ de temps étant d'autant plus courte que l'angle d'inclinaison mesuré du véhicule (2) utilitaire est plus grand.

16. Procédé de mise en oeuvre d'une fonction de test suivant la revendication 15, **caractérisé en ce que** l'instant t₁, auquel le frein de stationnement de la remorque (56) est ouvert, dépend du point de savoir si un effet de frein de stationnement minimum est atteint.

17. Procédé de mise en oeuvre d'une fonction de test suivant la revendication 15 ou 16, **caractérisé en ce que** l'appareil (12) de commande ferme automatiquement, à un instant t₂ après l'intervalle Δt₂ de temps, le frein de stationnement de la remorque.

18. Procédé de mise en oeuvre d'une fonction de test suivant l'une des revendications 15 à 17, **caractérisé en ce que** l'intervalle Δt₂ de temps est réglable et est mémorisé dans une mémoire d'écriture-lecture.

19. Procédé de mise en oeuvre d'une fonction de test suivant l'une des revendications 15 à 18, **caractérisé en ce que** l'appareil (12) de commande mesure la vitesse du véhicule au moyen de capteur (60) de la vitesse de rotation d'une roue.

20. Procédé de mise en oeuvre d'une fonction de test suivant l'une des revendications 15 à 19, **caractérisé en ce que** l'appareil (12) de commande émet un signal d'erreur pour le conducteur, si le véhicule (2) utilitaire ne reste pas à l'arrêt et roule lors de la réalisation de la fonction de test.

21. Procédé de mise en oeuvre d'une fonction de test suivant l'une des revendications 15 à 20, **caractérisé**
- **en ce que** l'appareil (12) de commande transmet un signal d'erreur à au moins un autre appareil de commande, si le véhicule (2) utilitaire ne reste pas à l'arrêt et roule lors de la mise en oeuvre de la fonction de test et
- **en ce que** le au moins un autre appareil de commande ferme, sur la base du signal d'erreur, un frein de service du véhicule (2) utilitaire, pour empêcher que le véhicule (2) utilitaire ne roule de manière intempestive.

22. Procédé suivant l'une des revendications 15 à 20, **caractérisé en ce qu'**après avoir effectué, avec succès, la fonction de test, on fait débuter automatiquement une autre fonction.
